**Europäisches Patentamt**

**European Patent Office**

**Office européen des brevets**

(19)

(11) Veröffentlichungsnummer: **0 248 214 B1**

(12) **EUROPÄISCHE PATENTSCHRIFT**

(45) Veröffentlichungstag der Patentschrift: **26.06.91**

(51) Int. Cl.⁵: **G21C 19/07, G21C 19/40**

(21) Anmeldenummer: **87106344.2**

(22) Anmeldetag: **02.05.87**

(54) **Lagergestell für nukleare Brennelemente.**

(30) Priorität: **02.06.86 CH 2229/86**

(43) Veröffentlichungstag der Anmeldung:
**09.12.87 Patentblatt 87/50**

(45) Bekanntmachung des Hinweises auf die
Patenterteilung:
**26.06.91 Patentblatt 91/26**

(84) Benannte Vertragsstaaten:
**DE ES FR GB IT SE**

(56) Entgegenhaltungen:
**EP-A- 0 082 317**
**DE-A- 2 730 850**
**FR-A- 2 211 720**
**FR-A- 2 433 225**
**US-A- 4 143 276**

(73) Patentinhaber: **GEBRÜDER SULZER AKTIENGE-
SELLSCHAFT**
**Zürcherstrasse 9**
**CH-8401 Winterthur(CH)**

(72) Erfinder: **Bosshard, Ernst**
**Grundstrasse 20**
**CH-8405 Winterthur(CH)**

## Beschreibung

Die Erfindung betrifft ein Lagergestell mit den Merkmalen des Oberbegriffs des Anspruchs 1. Lagergestelle zum Lagern nuklearer Brennelemente stehen üblicherweise zu mehreren nebeneinander in grossen, mit Wasser gefüllten Becken, wobei sowohl die Gestelle als auch die darin aufgenommenen Brennelemente vollkommen im Wasser untergetaucht sind.

Ein solches Lagergestell ist aus Fig. 6 und 7 der DE-OS 27 30 850 bekannt. Bei diesem Lagergestell sind die Deckel der Kammern von zwischen zwei benachbarte Wände der Vierkantrohre eingelegten und mit diesen verschweissten Blechstreifen gebildet. In gleicher Weise sind am unteren Ende der Vierkantrohre Blechstreifen eingelegt und mit den Vierkantrohren verschweisst, wobei die Blechstreifen mit ihrer oberen Stirnfläche jeweils das untere Ende der Kammer begrenzen. Diese Blechstreifen sind auf ihrer Unterseite mit einer Befestigungsleiste verschweisst, die ihrerseits mittels Schrauben an der Bodenplatte befestigt ist. Diese Schraubenverbindungen liegen an stark beanspruchten Stellen des Gestells. Die Vierkantrohre sind jeweils einstückige Bauteile, deren Herstellung mit einem relativ grossen Kostenaufwand verbunden ist. Ausserdem ist nachteilig, dass ein Auswechseln des neutronenabsorbierenden Materials mit erheblichem Aufwand verbunden ist, weil zuerst die Schweissverbindungen zwischen den oberen Rändern der Vierkantrohre und den Deckeln bildenden Blechstreifen spanabhebend entfernt werden müssen. Wegen des Zusammenschraubens der Vierkantrohre mit der Bodenplatte ist auch der Montageaufwand beträchtlich, wozu noch kommt, dass wegen der Erdbebengefahr die Schraubverbindungen nicht ausreichend sicher erscheinen.

Der Erfindung liegt die Aufgabe zugrunde, das Lagergestell der eingangs genannten Art so zu verbessern, dass das Auswechseln des neutronenabsorbierenden Materials mit geringerem Aufwand stattfinden kann und der Kostenaufwand für Herstellung und Montage ebenfalls verringert wird.

Diese Aufgabe wird erfindungsgemäss durch die Merkmale des Kennzeichens des Anspruchs 1 gelöst. Durch die Unterteilung jedes Vierkantrohres in zwei abgekantete Winkelbleche, die mit der Bodenplatte verschweisst und über die Distanzleisten bildenden Winkelprofile miteinander verbunden sind, lässt sich der Aufwand für das Material sowie die Herstell- und Montagekosten des Lagergestells wesentlich herabsetzen. Auch konstruktiv ist das Lagergestell einfacher, weil nun jede Kammer unten von der Bodenplatte selbst begrenzt ist. Durch die lösbare Verbindung der Deckel mit den Vierkantrohren ist auch ein leichteres Auswechseln des neutronenabsorbierenden Materials möglich, denn ein Entfernen von Schweissnähten entfällt hier. Durch die Schweissverbindung zwischen Vierkantrohren und Bodenplatte wird aber auch die Sicherheit des Lagergestells gegen Erdbeben erhöht.

Als Bodenplatte können sowohl plattenartige, für den Durchtritt des Wassers mit Löchern versehene Elemente als auch gitterrostartige Elemente verwendet werden. Bei Verwendung von gitterrostartigen Elementen muss darauf geachtet werden, dass die Gitterstäbe in der Flucht der Kammern liegen.

Unter "neutronenabsorbierendem Material" ist solches zu verstehen, das eine grössere Neutronenabsorption hat als das Material, aus dem die Vierkantrohre hergestellt sind. Als neutronenabsorbierendes Material werden z.B. Bor-Aluminium-Legierungen verwendet.

Ein Ausführungsbeispiel der Erfindung wird in der folgenden Beschreibung anhand der Zeichnung näher erläutert. Es zeigen:

Fig. 1     einen Vertikalschnitt durch einen Teil eines erfindungsgemässen Gestells,

Fig. 2     einen Schnitt nach der Linie II-II in Fig. 1, in vergrössertem Massstab und

Fig. 3     ein Detail A aus Fig. 1 im Schnitt entsprechend der Linie III-III.

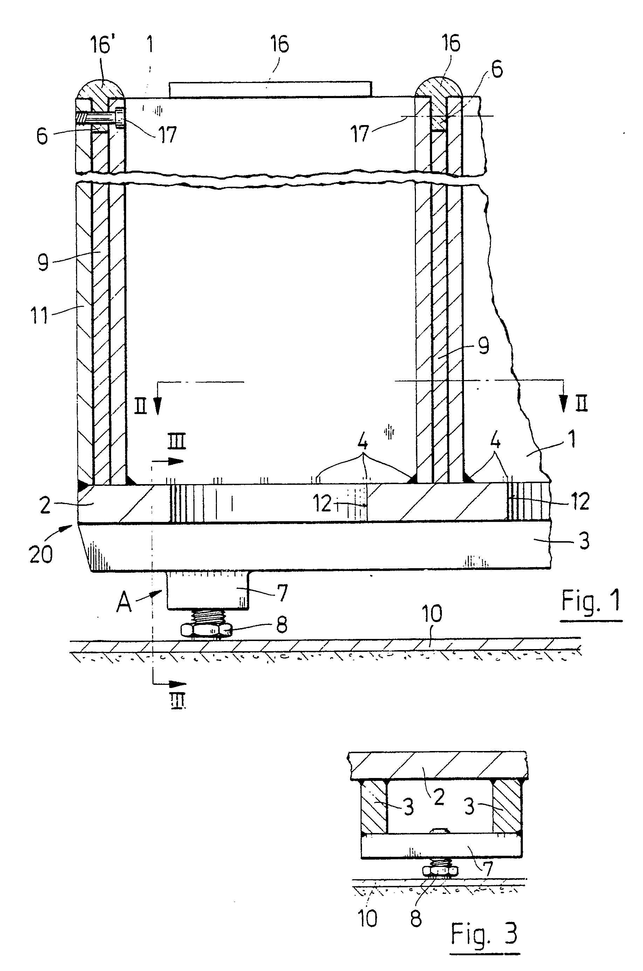

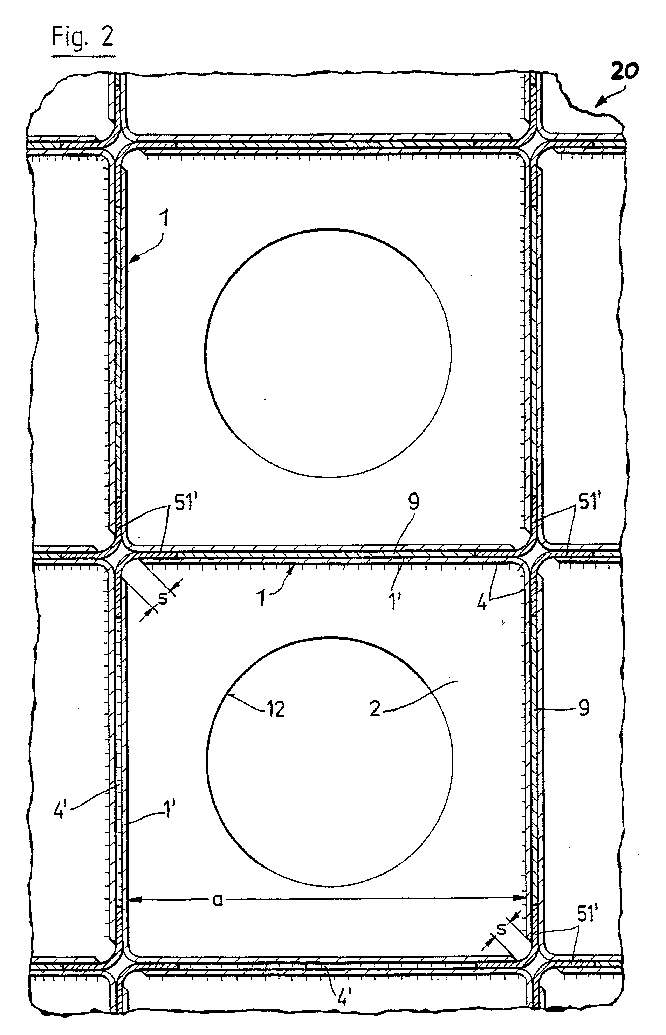

Gemäss Fig. 1 und 2 weist das Lagergestell eine Bodenplatte 20 von rechteckigem Grundriss auf, die aus einer Blechplatte 2 und auf deren Unterseite angeschweissten Verstärkungsrippen 3 besteht (Fig. 3). Das Gestell weist ausserdem mehrere Vierkantrohre 1 auf, die in zu den Rechteckseiten der Bodenplatte 20 parallelen Reihen angeordnet sind und an ihren unteren Rändern mittels Schweissnähten 4 auf der ebenen Blechplatte 2 befestigt sind. Die Anordnung der Vierkantrohre 1 zueinander ist so getroffen, dass zwischen ihnen Zwischenräume freibleiben, die also wegen der erwähnten reihenweisen Anordnung der Vierkantrohre ebenfalls parallel zu den Reckteckseiten der Bodenplatte 20 verlaufen.

Erfindungsgemäss setzt sich jedes Vierkantrohr 1 aus zwei um 90° abgekanteten Winkelblechen 1' zusammen (Fig. 2), deren Schenkellänge - im Grundriss gesehen - etwas kürzer ist als die Seitenlänge a des Vierkantrohres. Dadurch entstehen an zwei diagonal einander gegenüberliegenden Kanten des Vierkantrohres zwei Spalte s, die von je einer Winkelprofilleiste 51' überbrückt werden, so dass das Vierkantrohr über seinen ganzen Umfang geschlossen ist. Die Winkelprofilleisten 51' werden, auf diagonalen Geraden liegend, mit den zugehörigen Enden der benachbarten Winkelbleche verschweisst.

Die Zwischenräume sind in mehrere Kammern unterteilt, wobei jeweils eine Kammer zwischen den einander benachbarten, parallelen Wänden zweier Winkelbleche 1' liegen. Jede dieser Kammern ist unten durch die Blechplatte 2 begrenzt und seitlich durch zwei Winkelprofilleisten 51'. Die Schenkel jeder Winkelprofilleisten 51' sind dicht mit den angrenzenden parallelen Wänden der beiden Winkelbleche 1' verschweisst, z.B. durch zwei Rollenelektroden. Jede der Kammern ist oben durch einen Deckel 16 begrenzt, der leistenförmig ausgebildet ist. Der Deckel 16 weist einen Ansatz 6 auf, dessen Dicke gleich der Dicke der Winkelprofilleisten 51' ist und dessen Länge gleich dem lichten Abstand der beiden eine Kammer begrenzenden Winkelprofilschenkel ist. Mit diesem Ansatz 6 ragt der Deckel 16 etwas in die Kammer hinein, während der übrige Querschnitt des Deckels die oberen Stirnflächen der Vierkantrohre 1 übergreift. Die dichte Befestigung der Deckel 16 wird durch horizontale, den Ansatz 6 durchquerende Bolzenschrauben 17 erreicht, die einen Kopf mit Innensechskant aufweisen, der in der einen Wand des Vierkantrohres versenkt ist, während die andere Wand den Gewindeabschnitt der Schraube 17 aufnimmt. Im Bereich des Ansatzes 6 ruht der glatte Bolzen mit enger Passung in einer entsprechenden Bohrung des Ansatzes.

Die Gesamtheit der Vierkantrohre 1 ist aussen von einer Umfassungswand 11 umgeben, die mit ihrem unteren Rand auf der ebenen Blechplatte 2 ruht und mit dieser ebenfalls dicht verschweisst ist. Im Ausführungsbeispiel nach Fig. 1 hat die Umfassungswand 11 einen gleich grossen Abstand von den ihr benachbarten Vierkantrohren 1, wie er zwischen den einander benachbarten parallelen Wänden der Vierkantrohre besteht. Der so gebildete Zwischenraum zwischen der Umfassungswand 11 und den Vierkantrohren 1 ist ebenfalls in Kammern unterteilt, indem auch zwischen der Umfassungswand und einer parallelen benachbarten Wand eines Vierkantrohres ein Schenkel einer Winkelprofilleiste 51' und eine einfache ebene Distanzleiste angeordnet sind, die die seitliche Begrenzung einer Kammer bilden. Auch diese Kammern sind oben durch einen Deckel 16' begrenzt, der gleich ausgebildet ist, wie die vorher beschriebenen Deckel 16. Auch die dichte Befestigung der Deckel 16' ist analog, indem die Bolzenschrauben 17 mit ihrem Gewindeabschnitt in die Umfassungswand 11 eingeschraubt werden.

Jede der so gebildeten Kammern ist mit einer diese ausfüllenden Platte 9 aus neutronenabsorbierendem Material versehen, das z.B. aus gesintertem Bor-Aluminium-Blech besteht. Koaxial zu jedem Vierkantrohr 1 weist die Bodenplatte 20 eine Bohrung 12 auf.

Das beschriebene Lagergestell wird in einem mit Wasser gefüllten Lagerbecken aufgestellt, von dem in Fig. 1 und 3 nur der Boden 10 dargestellt ist. Zur Höheneinstellung des Lagergestells sind auf der Unterseite der Verstärkungsrippen 3 Stege 7 angeschweisst, in die Stellschrauben 8 eingeschraubt sind, die sich mit ihrem unteren Ende auf dem Boden 10 abstützen.

Normalerweise werden die Abmessungen des Lagergestells so gewählt, dass sie sich einfach transportieren und montieren lassen. Ueblicherweise werden innerhalb eines Lagerbeckens mehrere der beschriebenen Lagergestelle nebeneinander aufgestellt.

Die Herstellung des beschriebenen Lagergestells geschieht in der Weise, dass zuerst die Bodenplatte 20 aus ihren Teilen 2, 3 und 7 zusammengeschweisst wird, wonach die Umfassungswand 11 mit dem Rand der Blechplatte 2 verschweisst wird. Das soweit fertiggestellte Gestell wird dann in das noch nicht mit Wasser gefüllte Lagerbecken gestellt und mit Hilfe der Stellschrauben 8 nivelliert. Daraufhin wird eines der abgekanteten Winkelbleche 1' von der Innenseite her mit der Bodenplatte 20 verschweisst, wobei das Vierkantrohr noch offen ist und die beiden Schweissnähte 4 in Fig. 2 entstehen. Anschliessend wird dann das zweite Winkelblech 1' auf die Bodenplatte 20 abgesetzt und mit dieser verschweisst, wobei diese Verschweissung jedoch von der Aussenseite her erfolgt und die beiden Schweissnähte 4' in Fig. 2 entstehen. In gleicher Weise werden dann auch die übrigen Vierkantrohre auf der Bodenplatte 20 befestigt, wonach dann die Winkelprofilleisten 51' eingeschoben und mit den Blechen 1' verschweisst werden, wozu vorzugsweise ein Pressschweissverfahren zu Hilfe genommen wird, z.B. mittels der erwähnten Rollenelektroden. Dann werden die neutronenabsorbierenden Platten 9 in die Kammern eingeschoben, und die Deckel 16 bzw. 16' mit Hilfe der Bolzenschrauben 17 wasserdicht befestigt. Das Lagerbecken kann nunmehr mit Wasser gefüllt werden, wonach das Lagergestell zur Aufnahme von nuklearen Brennelementen bereit ist. Ueber die Bohrungen 12 in der Bodenplatte 20 kann das Wasser im Naturumlauf zirkulieren und die Brennelemente kühlen.

Der besondere Vorteil der beschriebenen Ausführungsform besteht darin, dass die Vierkantrohre aus relativ einfachen abgekanteten Winkelblechen sowie den Winkelprofilleisten hergestellt werden können. Es ergibt sich dadurch nur eine geringe Anzahl von Schweissnähten, wobei der Genauigkeitsaufwand relativ gering bleibt. Für das Verschweissen der Winkelbleche 1' mit der Bodenplatte 20 können einfachere Schweissvorrichtungen verwendet werden als bei Verwendung von geschlossenen Vierkantrohren.

Die Abmessungen der Vierkantrohre 1 betragen z.B. für die Seitenlänge a 155 mm, für die Höhe 4000 mm und für die Wanddicke 3,5 mm.

Anstelle der Platten 9 kann das neutronenabsorbierende Material auch Stabform mit kreisförmigem, elliptischem oder polygonalem Querschnitt aufweisen oder auch Pulver-oder Granulatform aufweisen. Im Falle sich berührender Winkelprofilleisten 51' können diese miteinander verschweisst sein, um die Festigkeit des Gestells zu verbessern. Dieses Verschweissen kann wiederum nach dem Pressschweissverfahren mit Hilfe der Rollenelektroden erfolgen.

**Ansprüche**

1. Lagergestell für nukleare Brennelemente, mit einer im Grundriss rechteckigen Bodenplatte (20) und mehreren darauf befestigten, die Brennelemente aufnehmenden Vierkantrohren (1), die in zu den Rechteckseiten der Bodenplatte parallelen Reihen angeordnet sind, wobei zwischen einander benachbarten Vierkantrohren (1) wasserdichte Zwischenräume bestehen, die mit neutronenabsorbierendem Material (9) gefüllt sind und die in mehrere wasserdichte, jeweils zwei einander benachbarten Wänden der Vierkantrohre zugeordnete Kammern unterteilt sind, von denen jede seitlich von zwei im Bereich der Kanten zweier einander benachbarter Wände der Vierkantrohre verlaufenden, dicht mit diesen befestigten Distanzleisten (51') und oben von einem dichtenden Deckel (16) begrenzt ist, dadurch gekennzeichnet, dass jedes Vierkantrohr (1) mit der Bodenplatte (20) verschweisst und aus zwei um 90° abgekanteten Winkelblechen (1') gebildet ist, deren Schenkel - im Grundriss gesehen - etwas kürzer ist als die Seitenlänge des Vierkantrohres, so dass an zwei diagonal einander gegenüberliegenden Kanten je ein Spalt freibleibt, dass ferner die Spalte von je einer die Distanzleiste (51') bildenden Winkelprofilleiste (51') überdeckt sind, dass jede Kammer unten von der Bodenplatte (20) begrenzt ist und dass der Deckel (16) lösbar mit den Vierkantrohren verbunden ist.

2. Gestell nach Anspruch 1, dadurch gekennzeichnet, dass einander berührende Winkel-Profilleisten miteinander verschweisst sind.

3. Gestell nach Anspruch 1 oder 2, dadurch gekennzeichnet, dass die Winkelprofilleisten (51') durch Pressschweissen mit den Vierkantrohren dicht verbunden sind.

4. Gestell nach einem der Ansprüche 1 bis 3, dadurch gekennzeichnet, dass der Deckel (16) einen in die Kammer ragenden Ansatz (6) aufweist und über mindestens einen den Ansatz durchdringenden Schraubenbolzen (17) mit den Vierkantrohren verbunden ist.

5. Gestell nach einem der Ansprüche 1 bis 4, dadurch gekennzeichnet, dass die Gesamtheit der Vierkantrohre von einer Umfassungswand (11) mit Abstand umgeben ist und dass der durch diesen Abstand gebildete Zwischenraum ebenfalls in wasserdichte, jeweils einer der Umfassungswand benachbarten Wand der aussenstehenden Vierkantrohre zugeordnete Kammern unterteilt ist.

**Claims**

1. A storage rack or frame or the like for nuclear fuel elements comprising a baseplate (20) which is rectangular in plan and, secured to the baseplate (20), a number of fuel-element-receiving square tubes (1) arranged in rows parallel to the rectangle sides of the baseplate, watertight spaces remaining between adjacent square tubes (1), such spaces being filled with a neutron-absorbent material (9) and being subdivided into a number of watertight chambers each associated with two adjacent walls of the tubes, each such chamber being bounded laterally by two spacers (51') which extend near the edges of two adjacent walls of the square tubes and which are sealingly secured thereto, each chamber being bounded at the top by a sealing cover (16), characterised in that each square tube (1) is welded to the baseplate (20) and comprises two metal right-angle members (1') whose arm as seen in plan is somewhat shorter than the length of the side of the square tube so that a gap is left at each of two diagonally opposite edges, the gaps are each covered by an angle section member (51') effective as the spacer (51'), each chamber is bounded at the bottom by the baseplate (20) and the cover (16) is releasably connected to the square tubes.

2. A frame according to claim 1, characterised in that angle section members which touch one another are welded together.

3. A frame according to claim 1 or 2, characterised in that the angle section members (51') are sealingly connected to the square tubes by pressure welding.

4. A frame according to any of claims 1 to 3, characterised in that the cover (16) has a projection (6) extending into the chamber and is connected to the square tubes by way of at least one screwthreaded Fastener (17) which extends through the projection (6).

5. A frame according to any of claims 1 to 4, characterised in that a surrounding wall (11) extends around all the square tubes at a distance therefrom and the gap corresponding to such distance is also subdivided into watertight chambers each associated with such a wall of the outermost square tubes as is adjacent the surrounding wall.

## Revendications

1. Structure de stockage d'éléments combustibles nucléaires, comportant une plaque de fond (20) rectangulaire vue en plan et plusieurs tubes carrés (1) fixés sur celle-ci, recevant les éléments combustibles, lesquels sont disposés en rangées parallèles aux côtés du rectangle de la plaque de fond, des enceintes intermédiaires étanches a l'eau, remplies d'un matériau (9) absorbant les neutrons, se trouvant entre les tubes carrés (1) voisins et étant subdivisées en plusieurs chambres étanches a l'eau, associées chacune à deux parois voisines l'une de l'autre des tubes carrés, chaque chambre étant délimitée latéralement par deux lattes en cornière (51') s'étendant dans la région des bords de deux parois voisines l'une de l'autre des tubes carrés et fixées de manière étanche à ceux-ci et, à la partie supérieure, par un couvercle (16) assurant l'étanchéité, caractérisée en ce que chaque tube carré (1) est soudé avec la plaque de fond (20) et est formé par deux tôles en cornière (1') coudées à 90° dont l'aile - vue en plan - est légèrement plus courte que la longueur de côté du tube carré, de sorte qu'il reste un espace sur chacun des deux bords opposés l'un à l'autre en diagonale, qu'en outre les espaces sont comblés chacun par une latte profilée en cornière (51'), formant la latte d'écartement (51'), que chaque chambre est délimitée à la partie inférieure par la plaque de fond (20) et que le couvercle (16) est assemblé de manière amovible aux tubes carrés.

2. Structure selon la revendication 1, caractérisée en ce que les lattes profilées en cornière se touchant l'une l'autre sont soudées entre elles.

3. Structure selon la revendication 1 ou 2, caractérisée en ce que les lattes profilées en cornière (51') sont assemblées de manière étanche aux tubes carrés, par soudage par pression.

4. Structure selon l'une des revendications 1 à 3. caractérisée en ce que le couvercle (16) présente un appendice (6) pénétrant dans la chambre et est assemblé aux tubes carrés, par au moins une vis (17) traversant l'appendice.

5. Structure selon l'une des revendications 1 à 4, caractérisée en ce que l'ensemble des tubes carrés est entouré, à une certaine distance, par une paroi d'enceinte (11) et en ce que l'intervalle formé par cette distance est également divisé en chambres étanches à l'eau, associées chacune à une paroi, voisine de la paroi d'enceinte, des tubes carrés situés à l'extérieur.

Fig. 1

Fig. 3

6

## Fig. 2